# FASCICULE DE BREVET EUROPEEN

(11) **EP 2 173 505 B1**
(45) Date de publication et mention de la délivrance du brevet: **03.09.2014**
(21) Numéro de dépôt: 08773892.8
(22) Date de dépôt: 07.07.2008
(51) Int. Cl.: B21J 19/02, B21K 21/12, F16F 1/38

(54) **DISPOSITIF POUR LA TRANSFORMATION D'UNE EXTREMITE D'UNE DOUILLE**
VORRICHTUNG ZUR UMFORMUNG EINES DÜBELENDES
DEVICE FOR RESHAPING THE END OF A DOWEL

(30) Priorité: 26.07.2007 FR 0705474
(43) Date de publication de la demande: 14.04.2010
(73) Titulaire: Anvis SD France SAS, 58302 Decize Cedex (FR)
(72) Inventeur: MARTIN, Pierre, F-58300 Decize (FR)
(74) Mandataire: Schmid, Nils T.F.
(86) Numéro de dépôt international: PCT/EP2008/005521
(87) Numéro de publication internationale: WO 2009/012880

(56) Documents cités:
- EP-A- 0 524 844
- JP-A- 7 155 879
- JP-A- 61 202 741
- US-A- 4 795 333
- US-A- 5 956 987

## Description

L'invention concerne un dispositif pour transformer une extrémité d'une douille, notamment une douille d'une articulation élastique.

On utilise des articulations élastiques qui peuvent être fabriquées à l'aide du dispositif de transformation conforme à l'invention. Cette articulation élastique joue un rôle de filtration acoustique entre la roue et l'habitacle. Ces articulations élastiques sont constituées au minimum d'une douille intérieure, d'un corps élastomère et éventuellement de douiller et composants complémentaires.

Lors de la transformation, la douille intérieure est comprimée sur ses extrémités pour mettre à disposition une surface d'appui élargie, radiale permettant de satisfaire les appuis requis sur l'élément de fixation de cette articulation. Ce processus de compression est connu comme procédé dit de bouterollage ou de repoussage, dans lequel une tête de formage, ladite bouterolle est déroulée sur l'extrémité de la douille par l'introduction de forces de pression axiales importantes, une ligne de contact radiale ou une bande de contact se trouvant formée entre la bouterolle et la surface frontale radiale de l'extrémité de la douille. La bouterolle déforme ainsi plastiquement l'extrémité de la douille orientée vers elle selon la possibilité de se déformer de façon radiale vers l'extérieur et/ou vers l'intérieur. Un procédé de bouterollage éprouvé de ce type est décrit de façon détaillée dans le brevet européen EP 0 524 844 A1.

Afin de générer les forces de pression de déformation destinées à comprimer l'extrémité de la douille, la bouterolle déroulée sur l'extrémité de la douille est déplacée par un moto-réducteur de façon relativement axiale par rapport à la douille à dilater. La douille est habituellement maintenue fixement dans un logement, qui est, habituellement, réalisée en tant que broche. La douille est maintenue de façon rigide dans le logement pour pouvoir introduire les forces de pression de déformation précisément à l'extrémité de la douille à comprimer.

On sait comment limiter l'élargissement radial de l'extrémité de la douille vers l'extérieur au moyen d'une matrice se trouvant à l'extérieur de manière radiale, laquelle matrice étant disposée dans le voisinage de l'extrémité de douille à déformer. Une matrice de ce type est représentée, par exemple, sur la figure 4 du brevet européen EP 0 524 844 A1 mentionné ci-dessus.

D'autres dispositifs de transformation sont connus des documents JP61-202741A (sur lequel se base le préambule de la revendication 1), US 5 956 987 A, JP07-155879 et US 4 795 333 A.

L'industrie automobile et également d'autre domaines techniques, pour lesquels des éléments oscillants au moyen d'une articulation élastique, comportant une douille intérieure avec une extrémité radialement dilatée, exigent de plus en plus des dimensions de douille axiale toujours plus précises, dont la tolérance pour toute une série de produits doit être nettement de façon répétable inférieure à 100 µm.

Cette précision dans la tolérance n'est possible avec le procédé de bouterollage connu, mentionné ci-dessus, qu'avec l'aide d'une technique de commande et de réglage extrêmement précise pour le moto-réducteur, ce qui nécessite, par ailleurs, un dispositif de fabrication très coûteux ainsi que des durées de production plus longs.

Un objectif de l'invention est de surmonter les inconvénients de l'état de la technique, notamment d'améliorer un dispositif pour transformer une extrémité d'une douille, notamment une douille d'une articulation élastique, de manière à pouvoir fabriquer de façon renouvelée des extrémités de douille dilatées avec une dimension axiale dont la zone de tolérance est réduite, notamment dans une zone de 100 µm.

Cette tâche est résolue grâce à un dispositif selon la revendication 1. Ce dispositif comprend une tête de formage qui est logée sur l'extrémité de la douille pour être déroulée de manière que des forces de pression de déformation dans une direction essentiellement axiale soient transmises par la tête de formage en déroulant l'extrémité, pour élargir l'extrémité radialement par compression une réception qui est susceptible de maintenir la douille et un mécanisme d'avance qui provoque un mouvement de réglage relatif axial entre la tête de formage et la réception, pour créer entre eux les forces de pression de déformation, caractérisée en ce qu'une butée est disposée fixement sur une réception avec laquelle la tête de formage peut s'engrener pour limiter axialement le mouvement de réglage relatif. Ensuite, il faudra développer le dispositif générique pour transformer une extrémité d'une douille de manière à disposer sur la réception sur laquelle on peut maintenir fixement la douille, une butée fixe destinée à la réception, avec laquelle la tête de formage est susceptible de s'engager entre la tête de formage et la réception pour limiter de façon axiale le mouvement de réglage relatif. La butée est placée de façon pivotante sur la réception. A l'aide du positionnement rotatif, on peut produire de façon répétable des dimensions axiales encore plus précises pour la douille. Grâce à la possibilité de rotation de la butée, on peut réduire des effets de frottements lors de la prise de contact de la tête de formage avec la butée car la butée tourne ensemble avec la tête de formage et ladite butée peut donc suivre le mouvement de rotation de la tête de formage. De cette manière, une usure de la butée et de la tête de formage est aussi nettement réduite. La dimension axiale précise souhaitée de la douille à transformer est également sécurisée par une multitude d'étapes de transformation avec la même butée et la même réception.

Avec la mesure conforme à l'invention de prévoir une butée axiale pour limiter le mouvement relatif de réglage entre la tête de formage et la réception, on peut mettre à disposition une dimension axiale extrêmement précise, même de la douille interne transformé, dont la zone de tolérance de 100 µm, de préférence. La taille de la zone de tolérance peut être réglée par le choix de matériaux durs destinés pour la butée. Grâce à des valeurs d'expérience on peut prendre en compte la déformation élastique de la butée, et si besoin est aussi, de la réception ainsi que des têtes de formage en déterminant la dilatation axiale de la douille interne à transformer afin de réaliser la dimension axiale souhaitée de la douille.

Grâce à la butée pour la tête de formage, on peut réaliser une dimension axiale extrêmement précise de la douille interne. Il s'est avéré de façon surprenante, que l'élargissement radial au moyen de la butée axiale pouvait également être réglé avec une zone de tolérance réduite.

De préférence, la butée est pourvue d'un palier à rouleau relié fixement avec le logement, ce qui permet un mouvement de rotation de la butée par rapport à la réception. Des roulements à rouleaux cylindriques ou à billes se sont avérés particulièrement appropriés dans ce cas. Le support à rouleaux peut présenter, de préférence, au moins un palier à rouleaux pour des forces de support axiales et/ou au moins palier à rouleaux pour des forces de support radiales. Dans un mode de réalisation particulier de l'invention, il s'est avéré qu'une combinaison de deux ou de trois paliers à rouleaux est avantageuse ; au moins un palier à rouleaux purement radial étant combiné avec au moins un palier à rouleaux purement axial.

Pour mettre à disposition une dilatation axiale à tolérance réduite de la douille à transformer, la butée présente une surface de contact radiale essentiellement horizontale, sur laquelle la tête de formage peut se dérouler régulièrement en s'engrenant avec la douille. A cet effet, la tête de formage peut présenter un gradin s'étendant de façon radiale vers l'extérieur et incliné d'environ 10° vers son axe de rotation, lequel tronçon peut s'engrener avec la surface de contact radiale et horizontale pour limiter le mouvement relatif de réglage axial de la tête de formage. Le tronçon a pour cela une surface de déroulement conique.

Afin de réaliser une construction particulièrement compacte de la structure de butée et de la réception pour la douille à transformer, la butée a une douille de support entourant la douille à transformer, qui est placée de façon rotative par un palier à rouleaux par rapport à la réception, notamment une partie de cadre de la réception. De préférence, la douille de portage utilise un matériau métallique particulièrement dur.

On réalise une structure du dispositif particulièrement compacte et stable lorsque la douille de portage entoure à l'extérieur, de façon radiale, la douille à transformer ; la douille de portage étant entourée à l'extérieur de façon radiale dans la partie de cadre de la réception.

Dans une amélioration préférée de l'invention, la douille de support est pourvue sur le côté orienté vers sa tête de formage, d'un disque de contact qui est, par exemple, vissé; le disque de contact pouvant être engrené avec la tête de formage.

Dans un mode de réalisation particulièrement préféré de l'invention, le dispositif est pourvu d'un capteur qui peut détecter les forces de pression exercées sur la butée, lesquelles forces de pression sont exercées par la tête de formage. Dans ce cas, le capteur peut être couplé, par exemple avec une commande qui commande le mécanisme d'avancement après dépassement d'un seuil de force de butée prédéterminé de, par exemple, 5 à 10 tonnes, de manière à ce que la butée et la tête de formage se séparent l'une de l'autre. Avec ce dispositif de réglage et de commande, on ne peut réaliser que des douilles dimensionnées de façon extrêmement précise en direction axiale.

Une tête de formage non revendiquée, mais qui peut être utilisée tout particulièrement pour le dispositif de transformation conforme à l'invention a une surface de transformation essentiellement conique qui s'étend de façon radiale dans la zone du diamètre de l'extrémité à transformer de la douille pour transmettre à la douille les forces de compression essentiellement axiales survenant lors du déroulement de la tête de formage sur l'extrémité de la douille autour de l'axe de rotation de la douille. La surface de formage est donc faiblement inclinée par rapport à la direction radiale qui est idéalement perpendiculaire à l'axe radial afin de réaliser la forme conique souhaitée pour le déroulement. La tête de formage comporte, en outre, une section d'arrêt sur laquelle la tête de formage est logée pour être déroulée sur l'extrémité de la douille. La section d'arrêt est habituellement maintenue dans un support de tête de formage construit de façon correspondante pour pouvoir réaliser un mouvement de déroulement défini.

La surface de formage conique doit être réalisée par un gradin radial dont le diamètre est au moins deux fois et demi plus grand que le diamètre du tronçon d'arrêt. Le gradin radial forme donc une surface de formage conique sur tout le côté du tronçon d'arrêt orienté vers l'extrémité de la douille et faisant saillie sur le diamètre de l'extrémité de la douille. La surface de formage doit servir de butée dans la zone extérieure agrandie pour limiter le mouvement de réglage axial par rapport à la douille à transformer.

Dans un mode de réalisation préféré de la tête de formage, le diamètre du gradin doit être d'au moins 3 ou 3,5 fois supérieur au diamètre du tronçon d'arrêt.

Pour la mise à disposition d'un gradin particulièrement stable avec une faible déformation élastique lors d'une limitation du mouvement de réglage par la butée sur la réception de la pièce à usiner, le gradin a sur son côté détourné de l'extrémité de la douille, un gradin avant ou d'appui en forme de gradin dont le diamètre est deux fois moins grand que le diamètre du tronçon d'arrêt.

Dans un mode de réalisation préféré on a prévu un diamètre d'environ 70 mm pour le gradin pour un diamètre d'environ 20 mm pour le tronçon d'arrêt de la tête de formage.

On doit, par contre, réaliser de façon continue sans gradin, le côté orienté vers l'extrémité de la douille du gradin de la tête de formage, lequel côté forme partiellement la surface de formage pour transformer l'extrémité de la douille.

Dans une amélioration on a prévu, du côté de l'extrémité de la douille, un tenon de centrage sur la tête de formage, lequel tenon peut s'engrener dans l'espace intérieur de la douille pour centrer la tête de formage lors du mouvement de déroulage. Le diamètre du gradin doit être au moins 3 fois, au moins 3,5 ou 4,5 ou 5 fois plus grand que le diamètre du tenon de centrage.

D'autres propriétés, avantages et caractéristiques de l'invention seront plus évidentes grâce à la description suivante de modes de réalisation préférés à l'aide des dessins annexés sur lesquels on montre :
Figure 1 une vue latérale schématique avec des zones de section transversales d'une dispositif de transformation selon l'invention ;
Figure 2 une vue en section transversale détaillée agrandie d'une structure de butée de la zone 2 selon la figure 1 ;
Figure 3 une vue en section transversale d'un autre mode de réalisation d'une structure de butée selon l'invention, et
Figure 4 une vue latérale d'une tête de formage.

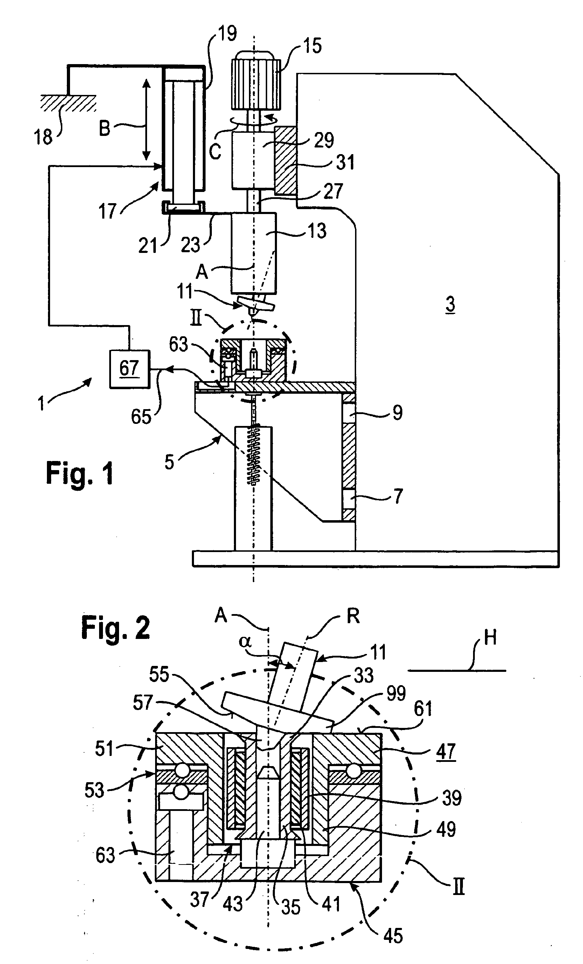

Sur la figure 1, le dispositif de transformation selon l'invention est pourvu, en général, du chiffre de référence 1. Le dispositif de transformation 1 comporte les éléments principaux :
- une tour de bâti 3 ;
- une réception 5 d'une pièce d'oeuvre, qui est fixée sur la tour de bâti 3 au moyen des flasques de fixation 7, 9 ;
- une tête de formage 11 ;
- un support de tête de formage 13 ;
- un entraînement rotatif 15 ; et
- un entraînement de translation 17.

L'entraînement de translation 17 est installé fixement à 18 de façon symbolique sur une structure de bâtiment. L'entraînement de translation 17 comprend un dispositif à cylindre piston 19, le piston 21 étant fixé avec le support de la tête de formage 13 par l'intermédiaire d'un couplage 23. De cette manière, le support de la tête de formage 13 peut être déplacé avec la tête de formage 11 de façon translatoire, le long de l'axe de direction axial A, selon le mouvement de levage qui est indiqué par la double flèche B pris du dispositif à cylindre piston 19.

L'entraînement rotatif 15 s'occupe du mouvement de rotation du support de la tête de formage 13 autour de l'axe de direction axial A, lequel entraînement rotatif étant relié par un arbre 27 avec le support de la tête de formage 13. L'arbre 27 est supporté par un guidage 29 qui est portée sur la tour de bâti 03 par l'intermédiaire d'un palier 31, de façon isolé des vibrations.

Comme cela est représenté sur les figures 1, 2 et 3, la tête de formage 11 est inclinée selon un angle d'attaque α de façon relative par rapport à l'axe de direction axiale A. La tête de formage 11 est disposée sur le support de la tête de formage 13 de manière à pouvoir réaliser un mouvement de déroulage défini sur une extrémité frontale 33 d'une douille 35 pour introduire des forces de compression orientée de façon axiale dans l'extrémité de la douille 35.

La douille 35 est une partie d'une articulation 37 élastique qui est composée de la douille 35 se trouvant à l'intérieur et une douille 39 extérieure. Un corps élastomère 41 est injecté entre les douilles 35, 39, lequel corps élastomère confère à l'articulation 37 la propriété élastique souhaitée.

Pour une réception fixe, axiale et radiale sûre de la douille 35 intérieure à transformer, ladite douille est glissée sur une broche 43 couplée avec la réception 5 pour la pièce d'oeuvre dont le diamètre extérieur correspond exactement au diamètre intérieur de la douille intérieure 35 afin de pouvoir définir une position déterminée axiale ainsi que radiale de la douille intérieure 35.

La broche 43 est fixée sur un cadre 45 en forme de U en section transversale dont le bras s'étend partiellement le long de l'articulation 37 élastique et est disposé de façon radiale vers l'extérieur.

Entre le cadre 45 et la douille extérieure 39 de l'articulation 37 élastique, on a introduit une douille de butée 47. La douille de butée 47 est composée d'un tronçon axial 49 et d'un tronçon radial 51, qui est essentiellement deux fois plus gros que le tronçon axial 49. Le tronçon radial 51 forme une partie d'un dispositif de palier à rouleaux 53 ou est en contact direct avec ce dispositif. Le dispositif de palier à rouleaux 53 est disposé entre le cadre 45 et la douille de butée 47. Le tronçon axial 49 est utilisé avec un jeu radial dans le cadre 45 pour former un logement ou un palier à glissement radial. Le dispositif de palier à rouleaux 53 est réalisé en tant que palier à billes axial dans le mode de réalisation représenté sur la figure 2, lequel palier à billes peut transmettre des forces axiales entre la douille de butée 47 et le cadre 45 ; la douille de butée 47 étant disposée de façon rotative sur le cadre 45 fixe.

Sur la figure 2, on a représenté l'étape de transformation au moyen de la tête de formage 11. La tête de formage 11 comprend une surface de formage 55 conique qui s'étend de façon radiale, laquelle surface de formage est inclinée selon l'angle d'attaque α par rapport à l'axe de rotation de la bouterolle. Du fait du mouvement de rotation combiné qui est indiqué par la flèche C, et du mouvement de translation de la tête de formage, l'extrémité 33 du côté frontal de la douille 35 intérieure est déformée par compression et par dilatation radiale. La position radiale de la tête de formage 11 sur son trajet de roulage est sécurisée grâce au tenon de centrage 57 qui pénètre dans l'espace intérieur de la douille intérieure 35. Grâce au mouvement d'avancement translatoire par l'entraînement de translation 17, l'extrémité 33 située du côté frontal est progressivement déformée jusqu'à ce qu'elle présente la forme élargie montrée sur la figure 2, où on vise une surface d'appui frontale essentiellement plus large.

Conformément à l'invention, le mouvement de réglage d'avancement axial pour la formation des forces de déformation est limité structurellement par la butée formée à l'aide de la douille de butée 47. Si le gradin 99 s'étendant fortement de façon radiale vers l'extérieur, de la tête de formage 11 est en contact direct avec le coté frontal 61 de la douille de butée 47, on empêche un mouvement d'avancement supplémentaire de la tête de formage 11 et une déformation supplémentaire de la douille intérieure 35 est exclue. De cette manière, on garantit un dimensionnement axial précis de la douille intérieure avec une extrémité radiale élargie.

Pour que la douille de butée 47, le dispositif de palier à rouleaux 53 et la tête de formage 11 ne soient pas endommagés inutilement, le dispositif de transformation conforme à l'invention 1 comprend un capteur de pression 63 qui détecte les forces transmises par la tête de formage 11 de la douille de butée 47 et qui est logé dans le cadre 45 de la réception 5. Le capteur 63 est relié avec un dispositif de commande et/ou de réglage 67 par l'intermédiaire d'une conduite 65 dans la zone de réception de la pièce à usiner 5, lequel dispositif de commande et/ou de réglage peut commander l'entraînement translatoire 17 à l'aide des signaux de pression détectés.

Si une valeur de seuil de pression déterminée auparavant est dépassée, le dispositif de commande et/ou de réglage 67 peut émettre un signal de réglage à l'entraînement de translation 17 pour que celui-ci soit retiré par la douille intérieure 35 qui est à transformer. La valeur de seuil peut donc être réglée pour pouvoir avoir un dimensionnement axial précis de la douille intérieure 35 qui puisse facilement être répété plusieurs fois, en prenant en compte la déformation élastique de la douille de butée 47, le palier à rouleaux 53 et du cadre 45.

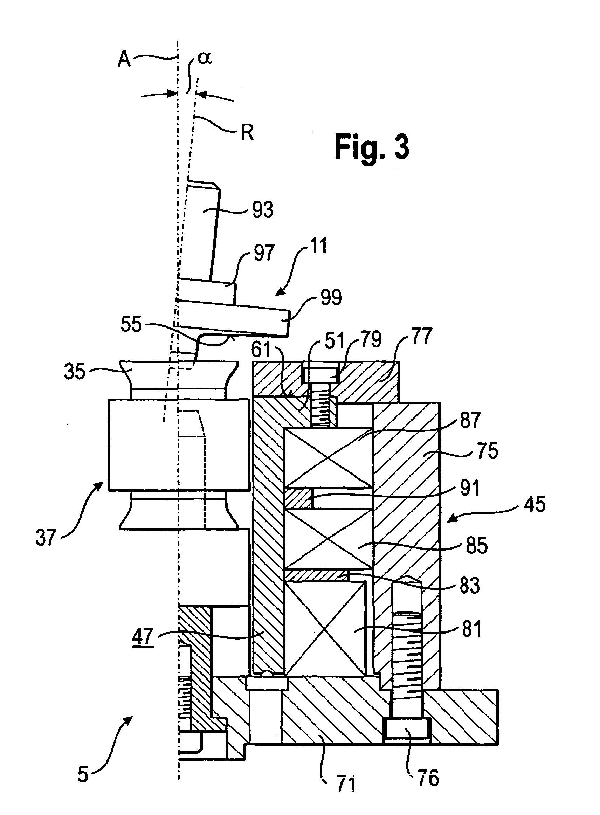

Sur la figure 3, on a représenté un mode de réalisation supplémentaire de la réception 5 pour l'articulation élastique 37. La tête de formage. 11 est représentée dans une position rétractée par la douille intérieure 35.

La réception 5 conforme à la figure 3 se distingue de celle de la figure 2 en ce qu'on a prévu trois éléments de logement pour loger la douille de butée 47 à l'intérieur du cadre 45 qui est formé en deux parties, à savoir une partie radiale 71 et une partie axiale 75, qui est relié avec la partie radiale par une vis 76. La partie axiale 75 s'étend le long de toute la douille de butée 47. Sur le côté frontal 61 de la douille de butée 47, on a fixé un disque de contact 77 dans un matériau dur par une vis 79. Le disque de contact 77 s'engrène avec la surface de formage 55 par rapport à la limitation axiale du mouvement d'avancement de la tête de formage 11.

Le dispositif de palier à rouleaux 53 conforme à la figure 3 a un logement 81 axial et distal par rapport à l'articulation élastique 37. A une distance axiale par rapport au logement axial 81 qui est réalisé par une rondelle 83, on a prévu un logement radial 85, un logement radial supplémentaire 87 étant disposé pour buter contre le tronçon 51 radial de la douille de butée 47. Les deux logements radiaux 85, 87 sont également séparés l'un de l'autre par une rondelle 91.

Les deux logements radiaux 85, 87 ainsi que le logement axial 81 garantissent un bon guidage de rotation pour la douille de butée 47 avec le disque de contact 77.

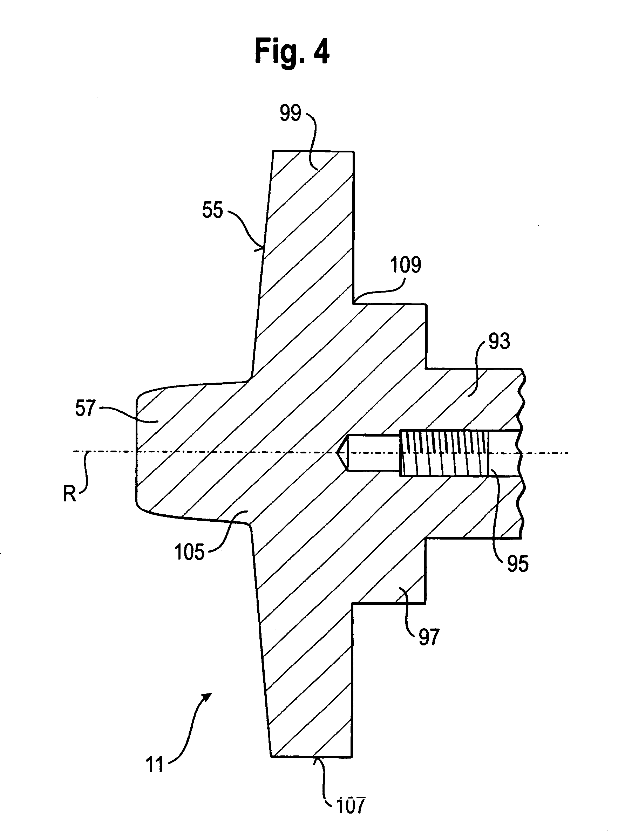

Sur la figure 4, on montre une tête de formage 11 dans une vue latérale en section transversale.

La tête de formage 11 a dans un côté détourné de la douille un tronçon de support ou de maintien 93 ayant un diamètre d'environ 40 mm. Dans le tronçon de maintien 93, on a réalisé un alésage de montage 95 de façon concentrique par rapport à l'axe de rotation R de la tête de formage 11, avec un filetage intérieur pour fixer la tête de formage 11 sur le support de la tête de formage 13.

Après le tronçon de maintien 93 cylindrique, on trouve un gradin avant 97 avec un diamètre d'environ 35 mm. Le gradin avant 97 doit supporter le tronçon principal 99 s'étendant nettement de façon radiale au-delà du gradin contre une flexion par un mouvement de butée de la tête de formage 11 avec la réception pour la pièce d'oeuvre .

Le tronçon principal 99 comprend une surface de formage 55 à orienter vers la douille, laquelle surface de formage est inclinée selon un angle de 5° pour réaliser une forme conique.

Le tronçon principal 99 s'étend nettement au-dessus du gradin avant 99 de façon radiale et atteint un diamètre d'environ 70 mm.

Pour centrer la tête de formage 11 lors de son mouvement de déroulage sur l'extrémité de la douille, un tenon de centrage 103 concentrique à l'axe de rotation R est connecté au tronçon principal 99, lequel tenon de centrage présente un diamètre maximal au pied 105 d'environ 17 mm. La surface de formage 55 s'étend de façon continue sur la hauteur axiale du pied 105, sans gradin jusqu'au bord radial 107 situé le plus à l'extérieur.

La dimension axiale du tronçon principal 99 est à peu près aussi grand que celui du gradin avant 97 et un peu plus petit à celui du tenon de centrage 57 et se situe à environ 18 mm. Une transition 109 entre le gradin avant 97 et le tronçon principal 99 s'étend de façon discontinue totalement radiale.

### Liste des références

- 1: Dispositif de trasformation
- 3: Tour de bâti
- 5: Réception pour la pièce d'oeuvre
- 7, 9: Flasque de fixation
- 11: Tête de formage
- 13: Support de tête de formage
- 15: Entrainement rotatif
- 18: Structure de bâtiment
- 17,19: Entrainement de translation
- 21: Piston
- 23: Coulage
- 27: Arbre
- 29: Guidage
- 31: Logement
- 33: Extrémité faciale
- 35: Douille intérieure
- 37: Articulation
- 39: Douille extérieure
- 41: Corps élastomère
- 43: Broche
- 45: Cadre en forme de U
- 47: Douille de butée
- 49: Tronçon axial
- 51: Tronçon radial
- 53: Dispositif de palier à rouleaux
- 55: Surface de formage
- 57: Tenon de centrage
- 61: Coté frontale
- 63: Capteur de pression
- 65: Conduite
- 67: Installation de commande et/ou réglage
- 71: Partie radiale
- 75: Partie axiale
- 77: Disque de contact
- 79: Vis
- 81: Palier axial
- 85, 87: Palier radial
- 91: Rondelle
- 93: Tronçon de support
- 95: Alésage de montage
- 97: Gradin avant
- 99: Gradin principal
- 105: Pied
- 107: Bord radial
- 109: Transition
- A: Axe de direction axiale
- B: Double flèche
- C: Flèche
- H: Horizontale
- R: Axe de rotation
- α: Angle d'attaque

## Revendications

1. Dispositif pour transformer une extrémité d'une douille, notamment une douille d'une articulation élastique (37), comprenant:
- une tête de formage (11) adaptée à être logée sur l'extrémité de la douille pour être déroulée de manière à ce que des forces de pression de déformation dans une direction essentiellement axiale soient transmises par la tête de formage (11) en déroulant l'extrémité, pour élargir l'extrémité radialement par compression;
- une réception qui est susceptible de maintenir la douille; et
- un mécanisme d'avance qui provoque un mouvement de réglage relatif axial entre la tête de formage (11) et la réception, pour créer entre eux les forces de pression de déformation,
- une butée étant disposée sur la réception avec laquelle la tête de formage (11) peut s'engreneur pour limiter axialement le mouvement de réglage relatif,
**caractérisé en ce que** la butée est logée de façon rotative sur la réception.

2. Dispositif selon la revendication 1, **caractérisé en ce que** la butée (47) est pourvue d'un palier à rouleaux (53) relié fixement avec la réception (5), lequel palier à rouleaux (53) permet un mouvement de rotation de la butée (47) par rapport à la réception (5).

3. Dispositif selon la revendication 2, **caractérisé en ce que** le palier à rouleaux présente au moins un palier à rouleaux (53) pour des forces de support axiales et/ou au moins un palier à rouleaux pour des forces de support radiales.

4. Dispositif selon une des revendications 1 à 3, **caractérisé en ce que** la butée (47) présente une surface de contact radiale (61), essentiellement horizontale avec laquelle un tronçon de la tête de formage (11) est adapté à s'engrener pour limiter le mouvement de réglage relatif axial.

5. Dispositif selon une des revendications 1 à 4, **caractérisé en ce que** la butée (47) présente une douille de support entourant la douille à transformer (35), laquelle douille de support est logée de façon rotative par un palier à rouleaux (53) par rapport à la réception (5), notamment une partie de cadre de la réception (5).

6. Dispositif selon la revendication 5, **caractérisé en ce que** la douille de support est adaptée à entourer la douille à transformer (35) de façon radiale vers l'extérieur et est entourée par la partie de cadre de la réception (5) de façon radiale vers l'extérieur.

7. Dispositif selon la revendication 5 ou 6, **caractérisé en ce que** la douille de support porte un disque de contact dur qui peut s'engrener avec la tête de formage (11).

8. Dispositif selon une des revendications 1 à 7, **caractérisé par** un capteur (63) pour détecter les forces de butée exercées sur la butée (47).

9. Dispositif selon la revendication 8, **caractérisé en ce que** le capteur (63) est couplé avec une commande qui après le dépassement d'un seuil de force de butée prédéterminé agit sur le mécanisme d'avance (17, 19) de manière à ce que la butée (47) et la tête de formage (11) soient séparées l'une de l'autre.

## Patentansprüche

1. Vorrichtung zum Umformen eines Endes einer Büchse, insbesondere einer Büchse eines elastischen Gelenks (37), umfassend:
- einen Formungskopf (11), der dazu ausgelegt ist, auf dem Ende der Buchse angeordnet zu werden, um derart abgerollt zu werden, dass Verformungsdruckkräfte in eine im Wesentlichen axiale Richtung von dem Formungskopf (11) durch Abrollen des Endes übertragen werden, um das Ende radial durch Kompression zu erweitern;
- eine Aufnahme, die geeignet ist, die Buchse zu halten; und
- einen Vorschubmechanismus, der eine axiale Relativstellbewegung zwischen dem Formungskopf (11) und der Aufnahme hervorruft, um zwischen diesen die Verformungsdruckkräfte zu erzeugen,
- wobei ein Anschlag auf der Aufnahme angeordnet ist, mit dem der Formungskopf (11) in Eingriff gelangen kann, um die Relativstellbewegung axial zu begrenzen,
**dadurch gekennzeichnet, dass** der Anschlag drehbar auf der Aufnahme angeordnet ist.

2. Vorrichtung nach Anspruch 1, **dadurch gekennzeichnet, dass** der Anschlag (47) mit einem Rollenlager (53) versehen ist, das fest mit der Aufnahme (5) verbunden ist, wobei das Rollenlager (53) eine Drehbewegung des Anschlags (47) in Bezug zur Aufnahme (5) ermöglicht.

3. Vorrichtung nach Anspruch 2, **dadurch gekennzeichnet, dass** das Rollenlager wenigstens ein Rollenlager (53) für axiale Stützkräfte und/oder wenigstens ein Rollenlager für radiale Stützkräfte aufweist.

4. Vorrichtung nach einem der Ansprüche 1 bis 3, **dadurch gekennzeichnet, dass** der Anschlag (47) eine im Wesentlichen horizontale radiale Kontaktfläche (61) aufweist, mit der ein Abschnitt des Formungskopfes (11) ein Eingriff gelangen kann, um die axiale Relativstellbewegung zu begrenzen.

5. Vorrichtung nach einem der Ansprüche 1 bis 4, **dadurch gekennzeichnet, dass** der Anschlag (47) eine Stützbuchse aufweist, die die umzuformende Buchse (35) umgibt, wobei die Stützbuchse durch ein Rollenlager (53) drehbar in Bezug zur Aufnahme (5), insbesondere einem Rahmenteil der Aufnahme (5), angeordnet ist.

6. Vorrichtung nach Anspruch 5, **dadurch gekennzeichnet, dass** die Stützbuchse dazu ausgelegt ist, die umzuformende Buchse (35) radial außenseitig zu umgeben, und von dem Rahmenteil der Aufnahme (5) radial außenseitig umgeben ist.

7. Vorrichtung nach Anspruch 5 oder 6, **dadurch gekennzeichnet, dass** die Stützbuchse eine harte Kontaktscheibe trägt, die mit dem Formungskopf (11) in Eingriff bringbar ist.

8. Vorrichtung nach einem der Ansprüche 1 bis 7, **gekennzeichnet durch** einen Sensor (63) zur Erfassung der auf den Anschlag (47) ausgeübten Anschlagkräfte.

9. Vorrichtung nach Anspruch 8, **dadurch gekennzeichnet, dass** der Sensor (63) mit einer Steuerung gekoppelt ist, die nach dem Überschreiten einer vorbestimmten Anschlagkraftschwelle auf den Vorschubmechanismus (17, 19) einwirkt, so dass der Anschlag (47) und der Formungskopf (11) voneinander getrennt werden.

## Claims

1. A device for reshaping the end of a dowel, in particular a dowel for an elastic joint (37), comprising:
- a shaping head (11) adapted to be provided to be rolled on the end of the dowel so that deformation pressure forces in a substantially axial direction are transmitted by the shaping head (11) when rolling on the end, to radially widen the end by compression;
- a holder that is capable of supporting the dowel; and
- an advance mechanism that performs a relative axial adjustment movement between the shaping head (11) and the holder, to create deformation pressure forces between them;
- an abutment being provided on the holder with which the shaping head (11) can engage to axially limit the relative adjustment movement,
**characterized in that** the abutment is rotatably provided on the holder.

2. The device according to claim 1, **characterized in that** the abutment (47) is provided with a roller bearing (53) fixedly connected to the holder (5), which roller bearing (53) enables the abutment (47) to rotate in relation to the holder (5).

3. The device according to claim 2, **characterized in that** the roller bearing presents at least one roller bearing (53) for axial support forces and/or at least one roller bearing for radial support forces.

4. The device according to one of claims 1 to 3, **characterized in that** the abutment (47) presents a substantially horizontal radial contact surface (61), with which a section of the shaping head (11) is adapted to engage to limit the relative axial adjustment movement.

5. The device according to any one of claims 1 to 4, **characterized in that** the abutment (47) presents a support dowel surrounding the dowel to be reshaped (35), which support dowel is rotatably provided by a roller bearing (53) in relation to the holder (5), in particular a frame portion of the holder (5).

6. The device according to claim 5, **characterized in that** the support dowel is adapted to surround the dowel to be reshaped (35) radially outward and is surrounded by the frame portion of the holder (5) radially outward.

7. The device according to claim 5 or 6, **characterized in that** the support dowel bears a hard contact disc that can engage with the shaping head (11).

8. The device according to one of claims 1 to 7, **characterized by** a sensor (63) to detect the abutment forces exerted on the abutment (47).

9. The device according to claim 8, **characterized in that** the sensor (63) is coupled with a control that, after a predetermined abutment force threshold is exceeded, acts on the advance mechanism (17, 19) so that the abutment (47) and the shaping head (11) are separated from each other.
